# EUROPEAN PATENT SPECIFICATION

(11) **EP 2 672 002 B1**
(45) Date of publication and mention of the grant of the patent: **30.03.2022**
(21) Application number: 11857656.0
(22) Date of filing: 02.02.2011
(51) Int. Cl.: D06P 7/00, B08B 7/00, D06P 1/94, C11D 11/00

(54) **CLEANING METHOD AND CLEANING DEVICE**
REINIGUNGSVERFAHREN UND REINIGUNGSVORRICHTUNG
PROCÉDÉ DE NETTOYAGE ET DISPOSITIF DE NETTOYAGE

(43) Date of publication of application: 11.12.2013
(73) Proprietor: YKK Corporation, Tokyo 101-8642 (JP); Hisaka Works, Ltd., Osaka-shi, Osaka 5300057 (JP)
(72) Inventor: UENO, Kiyotaka, Itami-shi Hyogo 664-0027 (JP); IDE, Takamutsu, Takarazuka-shi Hyogo 665-0813 (JP); SAITO, Takashi, Kurobe-shi Toyama 938-8601 (JP); HASHIDUME, Yoshihiro, Kurobe-shi Toyama 938-8601 (JP)
(74) Representative: Leinweber & Zimmermann
(86) International application number: PCT/JP2011/052142
(87) International publication number: WO 2012/105011

(56) References cited:
- EP-A2- 0 159 877
- DE-A1- 19 631 603
- JP-A- 5 132 880
- JP-A- 2001 172 524
- JP-A- 2002 363 869
- JP-A- 2006 528 553
- SCRIMSHAW J: "CO2 Dyeing Gets Commercial Roll-Out", INTERNATIONAL DYER, WORLD TEXTILE PUBLICATIONS, BRADFORD, GB, vol. 195, no. 7, 1 August 2010 (2010-08-01), pages 6-7, XP001571817, ISSN: 0020-658X

## Description

### TECHNICAL FIELD

The invention relates to a cleaning method and a cleaning device for cleaning a textile product and an autoclave after dyeing the textile product within the autoclave by using a fluid (a supercritical fluid) in a supercritical state.

### BACKGROUND ART

Conventionally, a large amount of water has been used as a dyeing medium in the case of dyeing the textile product, however, saving of water resource and a problem of waste water treatment have been pointed out, and a development of a dyeing technique which has lower environmental load has been demanded. Accordingly, in recent years, as a dyeing method in which a discharge amount of the waste water is extremely smaller than the conventional one, a method using a supercritical fluid as a dyeing medium has been proposed.

For example, Japanese Patent No. 3954103 (Patent Document 1) discloses a dyeing device and a dyeing method for dyeing a textile product by using a supercritical fluid.

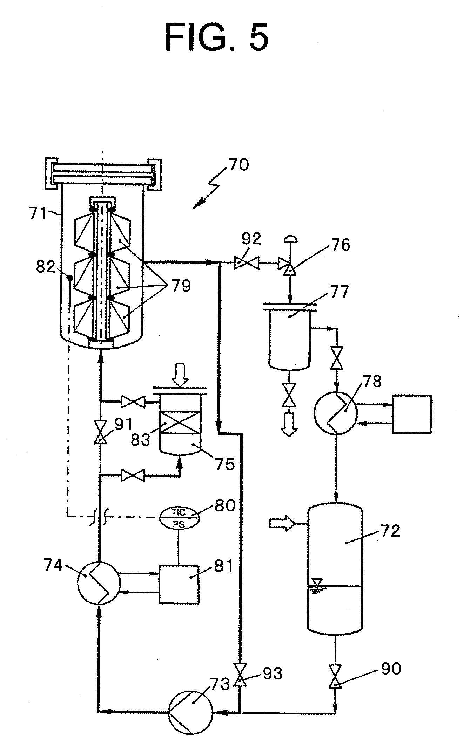

A dyeing device 70 described in the Patent Document 1 has an autoclave 71 which accommodates the textile product, a storage tank (a liquid storage) 72 which stores a fluid serving as a dyeing medium, a pump 73 which supplies the fluid from the storage tank 72 to the autoclave 71 and pressurizes the fluid, a heat exchanger 74 which is arranged between the pump 73 and the autoclave 71 and heats the fluid to a supercritical state, a dissolving tank (a saturating device) 75 which dissolves the dye into the fluid (the supercritical fluid) in the supercritical state, a pressure discharge valve 76 which adjusts pressure within the autoclave 71, a separating tank 77 which is arranged in a downstream side of the pressure discharge valve 76 and separates the dye from the fluid, and a condenser 78 which condenses the fluid from which the dye is separated, as illustrated in FIG. 5.

A bobbin 79 around which the textile product to be dyed are wound several times is accommodated within the autoclave 71 in a state in which the bobbin is retained by a tubular retaining portion. The fluid is stored in the storage tank 72 in a liquid state, and a valve 90 which can be opened and closed is provided in a pipe line in an outflow side of the storage tank 72.

The pump 73 supplies the fluid stored in the storage tank 72 toward the autoclave 71, and can return the supercritical fluid discharged from the autoclave 71 back to the autoclave 71 so as to circulate by switching opening and closing of the valve 90 which is arranged in a downstream side of the storage tank 72, and a valve 93 which is arranged between the autoclave 71 and the pump 73. Further, the pump 73 supplies the fluid from the storage tank 72 to the autoclave 71 at a predetermined flow rate, and can pressurize the autoclave 71.

The heat exchanger 74 is connected to a heating and cooling device 81 which has a process control means 80. The process control means 80 heats up and cools down the fluid passing through the heat exchanger 74, by controlling an operation of the heating and cooling device 81 based on a measured value of a temperature sensor 82 which is installed within the autoclave 71.

The dissolving tank 75 has in its inner portion an accommodating portion (a cage container for dye) 83 which can accommodate the dye, and can dissolve the dye into the supercritical fluid introduced into the dissolving tank 75 to a saturated state. Further, in the dyeing device 70, an upstream side and a downstream side of the dissolving tank 75 are coupled by a different pipe line in which the valve 91 is arranged, and the dyeing device 70 is structured such that the supercritical fluid passing through the heat exchanger 74 can be introduced into the autoclave 71 without passing through the dissolving tank 75.

A downstream side of the autoclave 71 is branched into a pipe line which is connected to the pressure discharge valve 76, and a pipe line which is connected to the pump 73, and valves 92 and 93 which can be opened and closed are arranged in the respective pipe lines.

The separating tank 77 separates the dye from the fluid which is discharged from the pressure discharge valve 76 according to sedimentation. The condenser 78 is connected to the cooling device, and is structured such as to cool the fluid from which the dye is separated so as to liquefy, and return the fluid in the liquid state to the storage tank 72.

Next, a description will be given of a method of dyeing the textile product by employing the supercritical fluid as the dyeing medium, while using the dyeing device 70 of the Patent Document 1. The Patent Document 1 describes single use of alkane (ethane, propane or pentane), ammonia, carbon dioxide, carbon monoxide, and dinitrogen oxide or mixed use of them, as a medium serving as the supercritical fluid, however, the use of carbon dioxide is considered generally for the reason of a low critical temperature and a handling safety in the present day.

First of all, the textile product to be dyed is wound around the bobbin 79 so as to be accommodated within the autoclave 71, and the dye is accommodated in the accommodating portion 83 of the dissolving tank 75. Subsequently, the pump 73 is driven, and the fluid (carbon dioxide) stored in the storage tank 72 is supplied to the autoclave 71 via the pump 73, the heat exchanger 74 and the dissolving tank 75.

At this time, the fluid comes to the supercritical state by being pressurized to a predetermined pressure by the pump 73, and thereafter being heated to a predetermined temperature by the heat exchanger 74. Further, the fluid (the supercritical fluid) in the supercritical state is introduced into the dissolving tank 75, and the dye is dissolved (dispersed) by the supercritical fluid to a saturated state within the dissolving tank 75.

The supercritical fluid dissolving the dye is carried in the autoclave 71. Within the autoclave 71, the supercritical fluid is circulated from an inner side of the bobbin 79 toward an outer side. At this time, a textile thread of the textile product is in a swelling state by heat of the supercritical fluid, and the dye dissolving into the supercritical fluid enters into the textile thread which is in a swelling state. As a result, the textile product is dyed.

Thereafter, the supercritical fluid passing through the autoclave 71 is carried to the pressure discharge valve 76 side and/or the pump 73 side, based on the control of the opening and closing of the valves 92 and 93 which are arranged in the downstream side of the autoclave 71. In this case, the supercritical fluid carried to the pressure discharge valve 76 side is depressurized and vaporized by being discharged from the pressure discharge valve 76, and thereafter in the separating tank 77, the dye is separated from the vaporized fluid based on sedimentation so as to be collected. Further, the fluid separating the dye in the separating tank 77 is returned to the storage tank 72 after being liquefied by the condenser 78. On the other hand, the supercritical fluid carried from the autoclave 71 to the pump 73 side is again carried in the autoclave 71 via the pump 73, the heat exchanger 74 and the dissolving tank 75.

By carrying out the steps as mentioned above for a predetermined time in a state of maintaining the autoclave 71 at a predetermined temperature and a predetermined pressure, it is possible to dye the textile product for a short time without using the water as the dyeing medium. Further, in the case that the carbon dioxide is used as the fluid of the dyeing medium, the carbon dioxide can be repeatedly used by being circulated at the dyeing time. Therefore, it is possible to obtain an advantage that environmental load can be reduced.

Further, according to the Patent Document 1, after the dyeing is applied to the textile product for a predetermined time while circulating the supercritical fluid in the autoclave 71, the supercritical fluid is flowed out of the autoclave 71, and the textile product is thereafter taken out of the autoclave 71. As a result, the dyed textile product is obtained.

Further, for example, in Japanese Patent Application Laid-Open (JP-A) No. 2002-363869 (Patent Document 2), a method of dyeing the textile product by using the supercritical carbon dioxide as the dyeing medium is disclosed.

The dyeing method described in the Patent Document 2 is to first of all put the textile product, a liquefied carbon dioxide and a dispersing dye in the autoclave so as to seal the autoclave, and thereafter leave the autoclave for a predetermined time at 20°C. Subsequently, an internal portion of the autoclave is heated to a predetermined temperature (70°C) and a predetermined pressure (17 MPa), and the state is kept for a predetermined time. As a result, the dyeing of the textile product is carried out.

After carrying out the dyeing process mentioned above, the autoclave is depressurized, and the internal pressure of the autoclave is left open to an atmospheric pressure. Further, a cleaning process is carried out thereafter in the Patent Document 2.

In the cleaning process of the Patent Document 2, the dyeing process is finished, the liquefied carbon dioxide is introduced again into the autoclave which is left open to the atmospheric pressure, and the autoclave is left for a predetermined time at 20°C. Subsequently, the internal portion of the autoclave is heated to a predetermined temperature (50°C) and a predetermined pressure (15 MPa), the state is kept for a predetermined time, the autoclave is thereafter depressurized, and the internal pressure of the autoclave is left open to the atmospheric pressure. The textile product is cleaned by carrying out the process mentioned above.

According to the Patent Document 2, by dyeing the textile product in the manner as mentioned above, it is possible to shorten a production system and achieve a small lot production, and it is possible to supply the excellent textile product to a market more quickly and more rationally.

On the other hand, for example, JP-A No. 2001-172524 (Patent Document 3) discloses a method of dyeing the textile product by a dye in which a molecular weight is equal to or more than 550, by using the supercritical carbon dioxide as the dyeing medium.

Briefly describing the method described in the Patent Document 3, the textile product is first of all filled in a high pressure container (an autoclave), and the temperature is thereafter raised to 40°C while charging the carbon dioxide in the high pressure container. Subsequently, the carbon dioxide is continuously charged in a state in which the temperature is kept, and the pressure in the high pressure container is raised to 20 MPa.

Next, the dye in which the molecular weight is equal to or more than 550 is filled in a different high pressure container which is coupled to the high pressure container mentioned above, and the carbon dioxide is filled in the high pressure container so as to raise the temperature and the pressure to the same state as mentioned above. Subsequently, the dye is introduced to the high pressure container filled with the textile product by opening the valve between the high pressure container filled with the textile product and the high pressure container filled with the dye, and driving a circulating pump coupled to two high pressure containers. Further, the temperature is raised to 130°C and the temperature state is kept for a predetermined time. As a result, the dyeing of the textile product is carried out.

After carrying out the dyeing mentioned above, the carbon dioxide is discharged little by little from the high pressure container. At this time, in proportion to the reduction of the temperature and the pressure within the high pressure container, the dye dissolved into the supercritical carbon dioxide is precipitated and attached onto the textile surface of the textile product. Accordingly, in the Patent Document 3, in order to remove the dye attached to the textile surface after temporarily discharging the carbon dioxide, the carbon dioxide is again filled in two high pressure containers so as to heat and pressurize to the supercritical state at 40°C and 20 MPa, and the supercritical state is kept for a predetermined time while driving the circulating pump, whereby the cleaning process is carried out.

According to the Patent Document 3, since the textile product is dyed by using the great dye in which the molecular weight is equal to or more than 550, the dye is firmly fixed to a polymer molecule constructing the textile, and a color fastness to rubbing and a color fastness to light are excellent.

### PRIOR ART DOCUMENT

### PATENT DOCUMENT

Patent Document 1: Japanese Patent No. 3954103
Patent Document 2: JP-A No. 2003-363869
Patent Document 3: JP-A No. 2001-172524

As a cleaning method of the autoclave after the dyeing is finished, DE 196 31 603 A1 discloses a cleaning method and a cleaning device for cleaning a product which is accommodated in an autoclave by circulating a fluid in a supercritical state. In particular, it discloses removing the dye in the fluid existing in the autoclave by introducing a fluid in which the dye is freed or is not included for cleaning. Further, in order to generate the fluid in which the dye is freed or is not included with respect to "autoclave 1" shown in Figs. 2 and 3 of DE 196 31 603 A1, "the autoclave 12" shown in Figs. 2 and 3 of DE 196 31 603 A1 is filled with absorbing agent (silica gel), and carbon dioxide in the supercritical state is introduced therein.

### DISCLOSURE OF THE INVENTION

### PROBLEM TO BE SOLVED BY THE INVENTION

In the Patent Document 1, after the dyeing process is carried out within the autoclave 71 by using the supercritical fluid, the textile product is taken out by flowing out the supercritical fluid from the autoclave 71. The cleaning process, for example, described in the Patent Document 2 and the Patent Document 3 is not carried out after the dyeing process. Therefore, when the supercritical fluid is flowed out after the dyeing process, the dye dissolved into the supercritical fluid is precipitated and attached to the textile surface of the textile product and the inner surface of the autoclave 71.

When the dye is precipitated and attached to the textile surface of the textile product, a dark colored part and a light colored part are formed in the dyed textile product, thereby generating a problem that a color tone of the textile product is dispersed, and a problem that a color fastness of the textile product is lowered.

On the other hand, in the Patent Document 2 and the Patent Document 3, after carrying out the dyeing process within the autoclave by using the supercritical fluid, the cleaning process is carried out for removing the dye attached to the textile product.

The cleaning processes described in these documents are carried out by discharging the carbon dioxide within the autoclave so as to temporarily leave open the internal pressure to the atmospheric pressure, after the end of the dyeing process, subsequently injecting the carbon dioxide again into the autoclave, and further heating and pressurizing the carbon dioxide to the supercritical state.

However, in the cleaning processes of the Patent Document 2 and the Patent Document 3, since it is necessary to discharge the carbon dioxide after the end of the dyeing process, and thereafter inject the carbon dioxide again, the cleaning processes are expensive due to calorific loss and time loss, and a problem that a cleaning efficiency is deteriorated has been generated.

Further, in the case of carrying out the cleaning process mentioned above, it is necessary to make the temperature when the carbon dioxide again injected to the autoclave is heated and pressurized lower than the dyeing temperature when the dyeing process is executed, and further lower than a glass transition temperature in the textile material of the textile product, for preventing the color from falling away from the textile product at the cleaning time.

In the case that the temperature of the carbon dioxide used for cleaning is low as mentioned above, a solubility at which the dye is dissolved into the supercritical carbon dioxide when the cleaning process is executed becomes low. Accordingly, it becomes hard to effectively remove the dye attached to the textile product by dissolving into the carbon dioxide for cleaning. Therefore, for example, in the case that a precipitation amount of the dye precipitated into the textile product is increased since the dyeing is carried out by a high concentration, and in the case that the device for carrying out the dyeing process and the cleaning process is enlarged in scale, a problem that a sufficient cleaning effect cannot be obtained has been generated.

The invention is made by taking the conventional problem mentioned above into consideration; and a specific object of the invention is to provide a cleaning method and a cleaning device which can efficiently and effectively clean a dyed product and an autoclave after a dyeing process is finished, after applying the dyeing process to the product including a synthetic resin by using a supercritical fluid.

### MEANS FOR SOLVING THE PROBLEMS

In order to achieve the object mentioned above, a cleaning method provided by the invention is basically structured as a cleaning method of cleaning a product which is accommodated in an autoclave in accordance with claim 1, and includes a synthetic resin dyed by circulating a fluid in a supercritical state, the fluid into which dye is dissolved, and the autoclave after the dyeing is finished, wherein a main feature is to continuously carry out the cleaning by successively introducing a pure fluid in the supercritical state, the pure fluid including no dye, into the autoclave after the end of the dyeing, thereby gradually reducing a concentration of the dye in the fluid in the supercritical state, the fluid existing in the autoclave.

The cleaning method according to the invention preferably includes lowering a temperature within the autoclave during the cleaning, and carrying out a temperature drop process from a start of lowering of the temperature to an end of the lowering in a predetermined temperature drop time.

In this case, it is preferable to lower the temperature in the autoclave to a temperature which is equal to or lower than a glass transition temperature in the synthetic resin material included in the product, and it is particularly preferable to maintain the lowered temperature, after the temperature in the autoclave is lowered to the temperature which is equal to or lower than the glass transition temperature.

Further, it is preferable to control a temperature drop speed for lowering the temperature between 2°C/min and 8°C/min.

Further, in the cleaning method according to the invention, it is preferable to keep a pressure in the autoclave at a time of the cleaning, within a predetermined range.

Next, a cleaning device provided by the invention , in accordance with claim 7, is basically structured as a cleaning device for cleaning a product which is accommodated in an autoclave and includes a synthetic resin dyed by circulating a fluid in a supercritical state, the fluid into which dye is dissolved, and the autoclave after the dyeing is finished, wherein a main feature is to have a circulating route which circulates the fluid in the supercritical state to the autoclave, a circulating pump which is arranged on the circulating route, a heating and cooling portion which is arranged on the circulating route and heats or cools the fluid, a temperature control portion which measures a temperature in the autoclave and controls an operation of the heating and cooling portion, a supply pump which supplies the fluid to the circulating route, a discharge valve which discharges the fluid in the supercritical state from the circulating route, and a pressure control portion which measures a pressure within the autoclave, and controls an operation of the supply pump and an opening and closing operation of the discharge valve.

Further, the cleaning device preferably has a separating tank which is connected to a downstream side of the discharge valve and separates the dye from the fluid which is discharged from the circulating route so as to be vaporized, and a collecting portion which collects the fluid from which the dye is separated.

### EFFECT OF THE INVENTION

The cleaning method according to the invention is to carry out the cleaning process continuously after the dyeing process by introducing the pure fluid in the supercritical state, the pure fluid including no dye, into the autoclave in succession to the dyeing process. It is possible to continuously carry out the cleaning process of the product and the autoclave by the supercritical fluid after the dyeing process, while suppressing precipitation of the dye into the surface of the product including the synthetic resin and the inner surface of the autoclave, by newly introducing the pure supercritical fluid which does not include any dye without discharging any supercritical fluid existing within the autoclave so as to gradually reduce a concentration of the dye in the supercritical fluid existing within the autoclave, after the end of the dyeing process as mentioned above.

In other words, according to the cleaning method of the invention, it is possible to effectively clean the product including the synthetic resin and the autoclave by the supercritical fluid in which the concentration of the dye is lowered, while suppressing the precipitation of the dye which is dissolved into the supercritical fluid. Accordingly, since it is possible to stably obtain the product in which the attaching amount of the dye is widely reduced, or the product to which the dye is not attached, and it is possible to clean the autoclave at the same time of cleaning the product, the invention is economically excellent. Further, since the cleaning process can be continuously carried out without leaving open the pressure within the autoclave to the atmospheric pressure after the dyeing process, it is possible to widely improve a cleaning efficiency.

The product including the synthetic resin according to the invention includes, for example, a textile product such as band-like tapes which are woven or knitted by a chemical textile made of synthetic resin, and resin molded products which are obtained by molding the synthetic resin in a predetermined shape. Accordinq to the cleaning method of the invention, it is possible to effectively and efficiently clean the product after applying the dyeing process by the supercritical fluid to the product such as the textile product or the resin molded products.

Particularly, in the cleaning method according to the invention, it is possible to preferably clean the textile product which is woven or knitted by the chemical textile, among the products including the synthetic resin as mentioned above. Therefore, a description will be mainly given below of a case that the cleaning method according to the invention is applied to the textile product.

Here, the higher the temperature or the pressure is, the higher a solubility of the dye in the supercritical fluid generally is. Further, the higher the temperature is, the greater the swelling of the textile is. However, the swelling of the textile is less affected by the pressure. Therefore, in the case that the textile product is cleaned by the high-temperature and high-pressure supercritical fluid, drop of the dye from the textile product is generated since the solubility of the dye in the supercritical fluid is high, and the swelling of the textile is great.

On the other hand, under a low temperature and low pressure condition, the swelling of the textile is small and the drop of the dye is not generated since the temperature is low. However, since the solubility of the dye in the supercritical fluid is low, it is hard to carry out the cleaning by the supercritical fluid. Further, under a high temperature and low pressure condition, since the swelling of the textile is great due to the high temperature, the drop of the dye from the textile tends to be generated, and the solubility of the dye in the supercritical fluid is lowered due to the low pressure. Therefore, the precipitation of the dye is generated, and it is impossible to carry out the cleaning by the supercritical fluid.

Accordingly, when the cleaning is carried out by the low-temperature and high-pressure supercritical fluid, the dye is hard to drop since the swelling of the textile is small due to the low temperature, and the preparation of the dye is hard to be generated since the solubility of the dye is high due to the high pressure. Therefore, the cleaning effect is great, and it is possible to efficiently carry out the cleaning of the textile product. The high temperature and the low temperature here indicate a temperature condition of which the boundary is marked by the glass transition temperature of the textile. Further, the high pressure and the low pressure indicate a pressure condition of which the boundary is marked by a supercritical point pressure.

Further, in the cleaning method according to the invention, the temperature in the autoclave is lowered during the cleaning process, and the temperature drop process from the start of the lowering of the temperature to the end of the lowering is carried out within the predetermined temperature drop time. As a result, it is possible to effectively suppress the precipitation of the dye into the textile product and the autoclave at a time of the temperature drop, and it is possible to suppress the drop of the color from the textile product which is dyed by the dyeing process, whereby it is possible to clean the textile product and the autoclave for a short time.

In this case, the temperature in the autoclave is lowered to the temperature which is equal to or lower than the glass transition temperature in the synthetic resin material included in the products. Particularly, in the case that the products including the synthetic resin according to the invention is the chemical textile product, the temperature is lowered to the temperature which is equal to or lower than the glass transition temperature in the textile material of the textile product. As a result, it is possible to more effectively prevent the color from dropping from the textile product during the cleaning process.

Further, it is possible to effectively clean the textile product and the autoclave without dropping the color from the textile product, by, after the temperature in the autoclave is lowered to the temperature which is equal to or lower than the glass transition temperature, maintaining the lowered temperature for a predetermined time.

Further, in the case of controlling the temperature drop speed which is obtained by dividing the temperature difference between the start of the lowering of the temperature and the end of the lowering by the temperature drop time between 2°C/min and 5°C/min, preferably between 3°C/min and 5°C/min, when the temperature in the autoclave is lowered by the cleaning process, which is different according to the kind of the dye, it is possible to more securely prevent the precipitation of the dye into the textile product and the autoclave at a time of the temperature drop, and it is possible to more securely prevent the drop of the color from the textile product. Particularly, in this case, it is further preferable to control the temperature drop speed per unit time from the start of the lowering of the temperature to the end of the lowering, between 2°C/min and 8°C/min.

Further, according to the invention, it is possible to more effectively prevent the precipitation of the dye at a time of the temperature drop, by keeping the pressure in the autoclave at a time of the cleaning within a predetermined range.

Next, the cleaning device according to the invention has the autoclave which accommodates the products (the textile product) including the synthetic resin, the circulating route which circulates the supercritical fluid into the autoclave, the circulating pump which is arranged on the circulating route, the heating and cooling portion which heats or cools the fluid circulating in the circulating route, the temperature control portion which measures the temperature in the autoclave and controls the operation of the heating and cooling portion, the supply pump which supplies the fluid to the circulating route, the discharge valve which discharges the supercritical fluid from the circulating route, and the pressure control portion which measures the pressure within the autoclave, and controls the operation of the supply pump and the opening and closing operation of the discharge valve.

According to the cleaning device of the invention mentioned above, the cleaning process of the products and the autoclave can be continuously carried out by successively introducing the supercritical fluid including no dye into the autoclave after applying the dyeing process to the products within the autoclave, so as to gradually reduce the concentration of the dye in the supercritical fluid existing in the autoclave while controlling the temperature drop speed and the pressure within the autoclave. Therefore, it is possible to efficiently and effectively clean the dyed products and the autoclave after the dyeing is finished.

Further, the cleaning device according to the invention has the separating tank which is connected to Lhe downstream side of the discharge valve, and separates the dye from the fluid which is discharged from the circulating route so as to be vaporized, and the collecting portion which collects the fluid from which the dye is separated. As a result, it is possible to securely collect and reuse the fluid. Therefore, it is possible to economically and efficiently clean the products without generating any waste water, and it is possible to widely reduce environmental load.

### BRIEF DESCRIPTION OF DRAWINGS

FIG. 1 is a schematic view schematically showing a structure of a cleaning device according to a first embodiment of the invention.
FIG. 2 is a schematic view schematically showing a structure of a cleaning device according to a second embodiment of the invention.
FIG. 3 is a graph showing results obtained by measuring T·K/S in a textile product according to Examples 1 to 3.
FIG. 4 is a graph showing results obtained by measuring a color difference based on an outermost layer, in the textile product according to Examples 1 to 3.
FIG. 5 is a schematic view schematically showing a structure of a dyeing device which carries out a dyeing process by using a supercritical fluid according to a prior art.

### MODE(S) FOR CARRYING OUT THE INVENTION

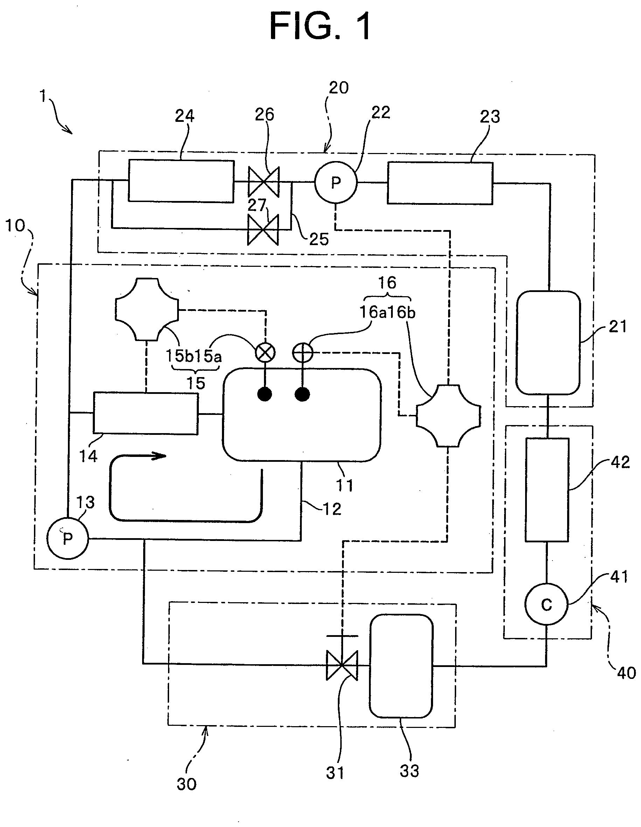

First of all, a description will be given in detail of a cleaning device according to a first embodiment of the invention with reference to FIG. 1. Here, FIG. 1 is a schematic view schematically illustrating a structure of the cleaning device according to the first embodiment.

The invention is not limited to the first embodiment and a structure of a cleaning device which will be described in a second embodiment mentioned later, but can be variously modified , within the limitations of the appended claims.

For example, in the following embodiment, a description will be given of a case that a textile product is cleaned by the cleaning device and the cleaning method according to the invention, however, the invention is not limited to this, but can be applied in the same manner to a product in which a synthetic resin is included as a main component, for example, a resin molded product (for example, a buckle) obtained by molding the synthetic resin into a predetermined shape, in addition to the textile product.

In a cleaning device 1 according to the first embodiment, a cleaning process of the textile product and an autoclave 11 is carried out by using the same kind of supercritical fluid as a supercritical fluid which is used in a dyeing process. In this case, carbon dioxide, dinitrogen oxide, ammonia, or alkane (for example, ethane or propane) can be used as the fluid, however, it is preferable to use the carbon dioxide for the reason of a low critical temperature and a handling safety. Accordingly, a description will be given below of a case that the carbon dioxide is used as the fluid in a supercritical state.

The cleaning device 1 according to the present embodiment is provided with a cleaning unit 10 which cleans the dyed textile product and the autoclave 11 based on circulation of the supercritical carbon dioxide, a supply unit 20 which supplies the carbon dioxide to the cleaning unit 10, a discharge unit 30 which discharges the carbon dioxide from the cleaning unit 10, and a collecting unit (a collecting and storing portion) 40 which collects the carbon dioxide discharged via the discharge unit 30. A description will be specifically given below of a structure of each of the units of the cleaning device 1.

The cleaning unit 10 in the cleaning device 1 has the autoclave 11 which accommodates the dyed textile product, a circulating route 12 which circulates the supercritical carbon dioxide into the autoclave 11, a circulating pump 13 which is arranged on the circulating route 12, a heating and cooling portion 14 which heats or cools the carbon dioxide in the supercritical state circulating in the circulating route 12 and the carbon dioxide supplied from the supply unit, a temperature control portion 15 which measures a temperature within the autoclave 11 and controls an operation of the heating and cooling portion 14, and a pressure control portion 16 which measures a pressure within the autoclave 11 and controls an operation of a supply pump 22 mentioned later and an opening and closing operation of a discharge valve 31 mentioned later.

The autoclave 11 is structured such that the autoclave 11 can accommodate and retain the textile product together with a bobbin in its inner portion, in a state in which the textile product is wound around the bobbin (not shown). The autoclave 11 has an inflow port which flows the supercritical carbon dioxide into its inner portion, and an outflow port which flows the supercritical carbon dioxide out of the inner portion, and the supercritical carbon dioxide flowing into the inner portion of the autoclave 11 from the inflow port is formed so as to flow in a diametrical direction from a center axis portion of the bobbin retained in the autoclave 11 toward an outer side, and flow out of the outflow port.

The circulating route 12 is connected to the outflow port and the inflow port of the autoclave 11, and is structured so as to circulate the supercritical carbon dioxide to the autoclave 11 by returning the supercritical carbon dioxide flowing out of the outflow port of the autoclave 11 to the inflow port of the autoclave 11.

The circulating pump 13 is provided on the circulating route 12, and circulates the supercritical carbon dioxide existing in the circulating route 12 and the autoclave 11. It is possible to improve a cleaning effect by the supercritical carbon dioxide by circulating the supercritical carbon dioxide as mentioned above.

The heating and cooling portion 14 is arranged at a position just before the inflow port of the autoclave 11 on the circulating route 12. Further, the heating and cooling portion 14 is structured such that the heating and cooling portion 14 can heat and cool the supercritical carbon dioxide in a switching manner.

The temperature control portion 15 has a temperature sensor 15a which measures a temperature inside the autoclave 11, and a temperature control main body portion 15b which controls an operation of the heating and cooling portion 14 based on results of measurement of the temperature sensor 15a. The temperature control portion 15 is structured such that the temperature control portion 15 can keep the inner side of the autoclave 11 at a fixed temperature, and lower the temperature in the autoclave 11 at a predetermined temperature drop speed, by controlling the operation of the heating and cooling portion 14.

The pressure control portion 16 has a pressure sensor 16a which measures a pressure in the autoclave 11, and a pressure control main body portion 16b which controls an operation of the supply pump 22 and an opening and closing operation of the discharge valve 31 based on results of measurement of the pressure sensor 16a. The pressure control portion 16 is structured such that the pressure control portion 16 can keep the pressure, for example, in the autoclave 11 at a fixed pressure, by controlling the operation of the supply pump 22 and the opening and closing operation of the discharge valve 31.

Next, the supply unit 20 in the cleaning device 1 has a storage tank 21 which stores the carbon dioxide, the supply pump 22 which supplies the carbon dioxide from the storage tank 21 toward the cleaning unit 10, a cooler portion (a first cooler portion) 23 which is arranged between the storage tank 21 and the supply pump 22, and a preheating portion 24 which is arranged in a downstream side of the supply pump 22 and preheats the carbon dioxide before supplying to the cleaning unit 10.

The storage tank 21 in the supply unit 20 stores the carbon dioxide in a liquid state, and is structured such that the storage tank 21 can continuously supply the carbon dioxide to the cleaning unit 10 based on an actuation of the supply pump 22.

The supply pump 22 sucks the liquefied carbon dioxide from the storage tank 21 so as to supply to the cleaning unit 10. Further, the supply pump 22 can pressurize the carbon dioxide supplied to the cleaning unit 10 to a predetermined pressure, based on a control of a flow rate (a supply amount) of the carbon dioxide by means of the pressure control portion 16 of the cleaning unit 10.

Further, since the supply pump 22 is provided in a pipe line which is arranged separately from the circulating route 12, pure and new supercritical carbon dioxide including no dye can be continuously supplied to the cleaning unit 10 while circulating the supercritical carbon dioxide in the autoclave 11 and the circulating route 12 by the circulating pump 13, after the dyeing process of the textile product is finished within the autoclave 11 as mentioned later. The cleaning process of the textile product and the autoclave 11 can be continuously carried out in succession to the dyeing process, by the provision of the supply pump 22 separately from the circulating pump 13.

The cooler portion 23 of the supply unit 20 is structured such that the cooler portion 23 cools the carbon dioxide sucked from the storage tank 21 by the supply pump 22 so as to feed the carbon dioxide in the liquid state to the supply pump 22. The supply of the carbon dioxide in the supply pump 22 can be stabilized by cooling the carbon dioxide by the cooler portion 23.

The preheating portion 24 can preheat the carbon dioxide passing through the supply pump 22 to the supercritical state before supplying to the cleaning unit 10. Further, a bypass route 25 is provided between the supply pump 22 and the cleaning unit 10, the bypass route 25 allowing the carbon dioxide supplied from the supply pump 22 to be supplied to the cleaning unit 10 without passing through the preheating portion 24. Further, first and second opening and closing valves 26 and 27 are arranged in an upstream side of the preheating portion 24 and in the bypass route 25, for allowing a flow path of the carbon dioxide to be changed.

Since the bypass route 25 mentioned above is provided, it is possible to directly supply the cold carbon dioxide which is not preheated, to the cleaning unit 10. As a result, it is possible to stably lower the temperature in the autoclave 11 in which the supercritical carbon dioxide circulates, and it is possible to easily enlarge the temperature drop speed.

The discharge unit 30 in the cleaning device 1 has a discharge valve 31 which discharges the supercritical carbon dioxide from the circulating route 12, and a separating tank 33 which is arranged in a downstream side of the discharge valve 31. The discharge valve 31 in the discharge unit 30 is connected to the pressure control portion 16, and an opening and closing operation of the discharge valve 31 is controlled by the pressure control portion 16.

The separating tank 33 arranged in the downstream side of the discharge valve 31 separates the dye and the other impurities from the carbon dioxide which is discharged via the discharge valve 31 so as to be vaporized. As a result, it is possible to efficiently collect only the carbon dioxide by the collecting unit 40 which is arranged in a downstream side of the separating tank 33, and it is possible to reuse the carbon dioxide.

The collecting unit 40 in the cleaning device 1 has a compressor 41 which sucks the carbon dioxide in a gas state from the separating tank 33 so as to compress, and an aftercooler portion 42 which cools the compressed carbon dioxide so as to form into a liquid state.

Since the collecting unit 40 has the compressor 41, it is possible to compress the collected carbon dioxide so as to reduce a volumetric capacity of the carbon dioxide.

Further, since the collecting unit 40 has the aftercooler portion 42, it is possible to liquefy the carbon dioxide so as to further reduce the volumetric capacity of the carbon dioxide. Further, the carbon dioxide liquefied by the aftercooler portion 42 is carried to the storage tank 21 of the supply unit 20 so as to be stored.

Next, a description will be given of a method of carrying out the cleaning process by the cleaning device 1 according to the first embodiment.

In the cleaning device 1 mentioned above, a cleaning process of removing the dye is carried out by circulating the supercritical carbon dioxide in the textile product which is dyed within the autoclave 11 by dissolving the dye into the supercritical fluid (particularly, the supercritical carbon dioxide), the autoclave 11 after the end of the dyeing, and the other positions (for example, the circulating route 12) in which the supercritical fluid circulates.

As long as the textile product is constructed by using at least one of a polyester fiber, a nylon fiber, an acrylic fiber and a polypropylene fiber, the textile product can be well dyed by using the supercritical carbon dioxide when the dyeing process is carried out. Accordingly, the invention is not particularly limited about the material of the textile product to be cleaned, however, the cleaning process can be preferably applied to the textile product constructed by using at least one of the fibers mentioned above.

The cleaning device 1 according to the present embodiment can carry out the dyeing process of the textile product by circulating the supercritical carbon dioxide as the dyeing medium in the circulating route 12 and the autoclave 11, in a state in which the dye is previously accommodated together with the textile product within the autoclave 11.

Here, a description will be given of a dyeing method of dyeing the textile product by using the supercritical carbon dioxide as the dyeing medium, before describing the cleaning method.

In the case that the dyeing process is carried out by using the cleaning device 1 mentioned above, first of all, the textile product is wound around the bobbin plural times, and the bobbin is accommodated within the autoclave 11. In the case that the textile product is dyed by using the supercritical carbon dioxide as the dyeing medium, a dispersed dye or an oil soluble dye is preferably used as the dye. For example, in the case that the textile product constructed by the polyester fiber is dyed into a red color, C.I. Disperse Red 22 is used as the dye, and the dye is accommodated within the autoclave 11 together with the textile product.

Next, the carbon dioxide is supplied to the cleaning unit 10 (the circulating route 12 and the autoclave 11) from the storage tank 21 via the supply pump 22 and the preheating portion 24, by driving the supply pump 22 of the supply unit 20. At this time, the carbon dioxide is pressurized by the supply pump 22, and is further heated by the preheating portion 24, and is supplied in the supercritical state to the cleaning unit 10.

In the cleaning unit 10, when the supercritical carbon dioxide is supplied from the supply unit 20, the supplied supercritical carbon dioxide is circulated in the circulating route 12 and the autoclave 11 by driving the circulating pump 13. As a result, the supercritical carbon dioxide is introduced into the inner portion of the autoclave 11 from the inflow port of the autoclave 11, and the supercritical carbon dioxide introduced into the autoclave 11 is flowed from an inner side of the bobbin toward an outer side, and flows out of the outflow port of the autoclave 11. Further, the supercritical carbon dioxide flowing out of the outflow port of the autoclave 11 is carried to the inflow port of the autoclave 11 via the circulating route 12 by driving the circulating pump 13, and is again introduced into the autoclave 11 from the inflow port.

At this time, the temperature control portion 15 controls the drive of the heating and cooling portion 14 which is arranged on the circulating route 12, while measuring the temperature in the autoclave 11, based on a previously set temperature. As a result, the circulating supercritical carbon dioxide is heated or cooled by the heating and cooling portion 14, and the temperature in the autoclave 11 is adjusted to a predetermined set temperature for carrying out the dyeing process so as to be kept.

Further, the pressure control portion 16 controls the operation of the supply pump 22 and the opening and closing operation of the discharge valve 31 while measuring the pressure in the autoclave 11, based on a previously set pressure. As a result, the pressure in the autoclave 11 is adjusted to a predetermined set pressure for carrying out the dyeing process so as to be kept.

In the dyeing process, the dye (for example, C.I. Disperse Red 22) which is previously accommodated together with the textile product within the autoclave is dissolved into the supercritical carbon dioxide while circulating the supercritical carbon dioxide into the circulating route 12 and the autoclave 11 as mentioned above. As a result, it is possible to dye the textile product.

Further, the cleaning process is continuously applied to the textile product and the positions, for example, the autoclave 11 through which the supercritical carbon dioxide passes, by using the cleaning device 1 according to the present embodiment, after the end of the dyeing process mentioned above. In this case, since the supercritical carbon dioxide including the dye is circulated in the autoclave 11 and the circulating route 12 at the end of the dyeing process, the discharge valve 31 is opened as well as the supply pump 22 is driven, for carrying out the cleaning process in succession to the dyeing process.

As a result, the pure supercritical carbon dioxide including no dye is supplied to the cleaning unit 10 from the storage tank 21 via the supply pump 22 and the preheating portion 24. At the same time, the supercritical carbon dioxide into which the dye is dissolved is discharged from the cleaning unit 10 via the discharge valve 31. Therefore, it is possible to continuously carry out the cleaning operation of the textile product and the autoclave 11 by the supercritical carbon dioxide in succession to the dyeing process, while gradually reducing the concentration of the dye in the supercritical carbon dioxide circulating in the autoclave 11 and the circulating route 12 with time.

Further, the carbon dioxide which is discharged via the discharge valve 31 so as to be vaporized is carried to the separating tank 33, and the dye is separated from the carbon dioxide in the separating tank 33. Further, the carbon dioxide from which the dye is separated is compressed by the compressor 41 and is further cooled by the aftercooler portion 42 so as to be liquefied. Further, the carbon dioxide in the liquid state is returned to the storage tank 21 from the aftercooler portion 42, and is reused for the dyeing process or the cleaning process.

Further, in the cleaning process according to the present embodiment, the temperature in the autoclave 11 is lowered by controlling the heating and cooling portion 14 by the temperature control portion 15 of the cleaning unit 10, while supplying the pure supercritical carbon dioxide to the cleaning unit 10 from the supply pump 22 via the preheating portion 24, and the temperature drop process from the start of the lowering of the temperature to the end of the lowering is carried out within a predetermined temperature drop time, by controlling the temperature drop speed for lowering the temperature within a predetermined range.

At this time, the temperature in the autoclave 11 may be lowered continuously at a fixed speed, or may be lowered while changing the speed, as long as the temperature drop speed obtained by dividing the temperature difference between the start of the lowering of the temperature and the end of the lowering by the temperature drop time can be controlled within the predetermined range. Further, for example, the temperature in the autoclave 11 can be lowered step by step.

It is possible to suppress the precipitation of the dye which is dissolved into the supercritical carbon dioxide, by lowering the temperature in the autoclave 11 by the temperature drop speed within the predetermined range, and it is possible to inhibit the dye from getting away from the textile so as to cause the drop of the color, by deflating each of the textile threads in the textile product which is swelled in the dyeing.

In the case that the temperature in the autoclave 11 is lowered, the carbon dioxide may be supplied to the circulating route 12 via the bypass route 25 without passing through the preheating portion 24, when the carbon dioxide is supplied by driving the supply pump 22, whereby it is possible to easily and stably lower the temperature in the autoclave 11.

The range of the temperature drop speed which is controlled when the temperature in the autoclave 11 is lowered, is different according to the kind of the dye used for dyeing, however, for example, in the case that the red dye (specifically, C.I. Disperse Red 22) mentioned above is used for the dye, the temperature in the autoclave 11 is lowered by controlling the temperature drop speed between 2°C/min and 8°C/min, preferably between 3°C/min and 5°C/min.

In other words, if the temperature drop speed which lowers the temperature in the autoclave 11 becomes lower than 2°C/min, the concentration of the dye dissolved into the supercritical carbon dioxide is lowered before each of the textiles of the textile product is deflated sufficiently. At this time, the dye entering into the textile tends to flow out of the textile for keeping a balance relationship between the concentration of the dye in the textile and the concentration of the dye in the supercritical carbon dioxide, and it is thought that the drop of color is significantly generated in the textile product. Therefore, the dyeing product having a high concentration is hard to be obtained, and there is a risk that the reduction of the cleaning efficiency is caused by the flowing dye.

On the other hand, if the temperature drop speed becomes higher than 8°C/min, the temperature in the autoclave 11 becomes low before the concentration of the dye in the supercritical carbon dioxide is sufficiently lowered. Therefore, the dye tends to be precipitated so as to be attached to the textile product or the autoclave 11, and it is thought that a quality such as the color fastness of the textile product is lowered.

Accordingly, it is possible to gradually lower the concentration of the dye which is dissolved into the supercritical carbon dioxide little by little, while deflating each of the textiles of the textile product, by controlling the temperature drop speed for lowering the temperature in the autoclave 11 between 2°C/min and 8°C/min as mentioned above. Accordingly, it is possible to effectively prevent the color drop from being generated in the textile product due to the outflow of the dye from the textile, and it is possible to effectively prevent the precipitation of the dye into the textile product and the autoclave 11.

Particularly in this case, it is preferable to control the temperature drop speed per unit time within a predetermined range, specifically between 2°C/min and 8°C/min, when the temperature in the autoclave 11 is lowered. As a result, it is more securely prevented the color drop from generating in the textile product, and the precipitation of the dye into the textile product and the autoclave 11.

Further, in the cleaning process according to the present embodiment, when the temperature in the autoclave 11 is lowered, the temperature drop speed is controlled as mentioned above, and the pressure in the autoclave 11 is controlled within the predetermined range by the pressure control portion 16. At this time, it is preferable that the pressure in the autoclave 11 is controlled to be equal to or higher than the supercritical point pressure and equal to or lower than 30 MPa, preferably to the same magnitude as the pressure in the autoclave 11 which is kept at a time of the dyeing process. It is possible to effectively prevent the precipitation of the dye into the textile product and the autoclave 11 by controlling the pressure in the autoclave 11 in the predetermined range, at a time of the cleaning process as mentioned above.

It is preferable that the pressure in the autoclave 11 is controlled within the predetermined range as mentioned above, however, in relation to the performance (particularly, the performances of the pressure control portion 16 and the supply pump 22) in the cleaning device, the pressure in the autoclave 11 rapidly drops when starting lowering the temperature in the autoclave 11, so that it may be hard to constantly control the pressure within the predetermined range. In this case, the pressure in the autoclave 11 may be thereafter controlled within the predetermined range by being increased by the pressure control portion 16.

In the cleaning process, the temperature drop process for lowering the temperature in the autoclave 11 is carried out at least until the temperature in the autoclave 11 is lowered to be equal to or lower than the glass transition temperature in the textile material of the textile product.

Further, after the temperature in the autoclave 11 is lowered to be equal to or lower than the glass transition temperature, it is possible to keep the autoclave 11 at the lowered temperature for a predetermined time, while continuously supplying the carbon dioxide in the supply pump 22 and discharging the supercritical carbon dioxide in the discharge valve 31 as occasion demands. At this time, the kept temperature in the autoclave 11 is set to be equal to or higher than the critical point of the carbon dioxide and equal to or lower than the glass transition temperature of the textile material.

Since the autoclave 11 is maintained at the temperature when the temperature drop is finished for the predetermined time as mentioned above, even in the case that the dye is precipitated into the textile product and the autoclave 11 so as to be attached, for example, when the temperature in the autoclave 11 is lowered, it is possible to again dissolve the attached dye into the supercritical carbon dioxide so as to be removed.

After the temperature in the autoclave 11 is kept for the predetermined time, the pressure in the autoclave 11 is left open to the atmospheric pressure by stopping the supply pump 22. As a result, the cleaning process is finished, and the textile product can be taken out of the autoclave 11.

The textile product and the autoclave 11 can be efficiently cleaned while suppressing the precipitation of the dye into the textile product and the autoclave 11 when the supercritical carbon dioxide is cooled, and suppressing the color drop from the textile product which is dyed by the dyeing process, by continuously carrying out the cleaning process of the textile product and the autoclave 11 in succession to the dyeing process, as mentioned above. Further, since it is not necessary to carry out the conventional inefficient work of temporarily discharging the supercritical carbon dioxide from the autoclave 11 and again injecting the supercritical carbon dioxide, it is possible to widely improve the cleaning efficiency.

Particularly, in the cleaning process according to the present embodiment, since the temperature drop speed which lowers the temperature in the autoclave 11 is maintained within the predetermined range, while supplying the pure new supercritical carbon dioxide into the autoclave 11, it is possible to effectively prevent the dye from being precipitated into the textile product and the autoclave 11 so as to be attached, and it is possible to prevent the color drop from being generated in the textile product, whereby it is possible to stably obtain the textile product which is excellent in the quality such as the color fastness and uniformly indicate a desired color.

Further, since the cleaning process is carried out while circulating the supercritical carbon dioxide in the autoclave 11 and the circulating route 12, it is possible to easily control the temperature drop speed in the autoclave 11, and an agitating effect of the supercritical carbon dioxide can be obtained, so that it is possible to further improve the cleaning effect.

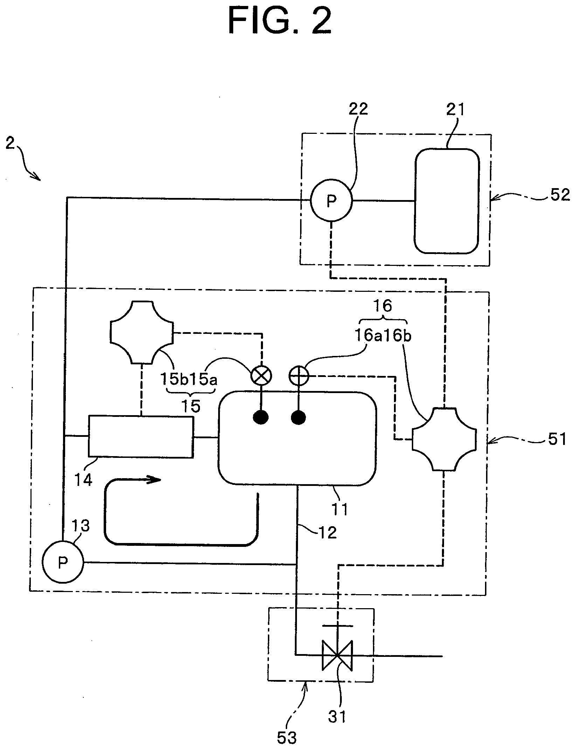

Next, a description will be given in detail of a cleaning device 2 according to a second embodiment of the invention with reference to FIG. 2. Here, FIG. 2 is a schematic view schematically illustrating a structure of the cleaning device 1 according to the second embodiment. In the second embodiment, a description of elements having the same structures as the members or the portions described in the first embodiment mentioned above will be omitted by using the same reference numerals.

The cleaning device 2 according to the second embodiment has a minimum specification which is necessary for carrying out a cleaning method according to the invention, and is constructed by using a part of the dyeing device for dyeing the textile product. Therefore, the cleaning device 2 can continuously clean the textile product in succession to the dyeing process of the textile product.

The cleaning device 2 in the present embodiment is provided with a cleaning unit 51 which cleans the dyed textile product and the autoclave 11 based on the circulation of the supercritical carbon dioxide, a supply unit 52 which supplies the carbon dioxide to the cleaning unit 51, and a discharge unit 53 which discharges the carbon dioxide from the cleaning unit 51, and the collecting unit 40 arranged in the cleaning device 1 in the first embodiment mentioned above is not arranged in the cleaning device 2.

The cleaning unit 51 in the second embodiment has the autoclave 11, the circulating route 12 which circulates the supercritical carbon dioxide into the autoclave 11, the circulating pump 13 which is arranged on the circulating route 12, the heating and cooling portion 14 which heats or cools the carbon dioxide in the supercritical state circulating in the circulating route 12 and the carbon dioxide supplied from the supply unit, the temperature control portion 15 which controls the operation of the heating and cooling portion 14 by measuring the temperature in the autoclave 11, and the pressure control portion 16 which measures the pressure in the autoclave 11, and controls the operation of the supply pump 22 and the opening and closing operation of the discharge valve 31, and is structured in the same manner as the cleaning unit 10 in the first embodiment mentioned above.

The supply unit 52 in the second embodiment has the storage tank 21 which stores the carbon dioxide, and the supply pump 22 which supplies the carbon dioxide from the storage tank 21 toward the cleaning unit 51, and is structured by omitting the preheating portion 24 and the bypass route 25 from the supply unit 20 in the first embodiment mentioned above.

Further, the discharge unit 53 has the discharge valve 31 which discharges the supercritical carbon dioxide from the circulating route 12. The discharge valve 31 is connected to the pressure control portion 16 of the cleaning unit 51, and the opening and closing operation of the discharge valve 31 is controlled by the pressure control portion 16.

By using the cleaning device 2 according to the second embodiment mentioned above, it is possible to continuously apply the cleaning process to the textile product and the positions through which the supercritical carbon dioxide passes, such as the autoclave 11, for example, after the dyeing process as mentioned above is finished in the autoclave 11.

Specifically, when the dyeing process is finished, the supercritical carbon dioxide is discharged at a predetermined flow rate by driving the supply pump 22 and opening the discharge valve 31. As a result, the pure carbon dioxide including no dye is supplied to the cleaning unit 51 from the storage tank 21 via the supply pump 22, and the supercritical carbon dioxide into which the dye is dissolved is simultaneously discharged from the cleaning unit 51 via the discharge valve 31. Therefore, it is possible to continuously carry out the cleaning process of the textile product and the autoclave 11 in succession to the dyeing process, while gradually reducing the concentration of the dye in the supercritical carbon dioxide circulating in the autoclave 11 and the circulating route 12 with time.

At this time, the temperature in the autoclave 11 is lowered to be equal to or lower than the glass transition temperature in the textile material of the textile product, and the temperature drop speed is controlled within the predetermined range, by controlling the heating and cooling portion 14 by the temperature control portion 15, in the same manner as the case of the first embodiment mentioned above, while supplying the pure carbon dioxide by the supply pump 22. Further, at the same time, the pressure in the autoclave 11 is controlled within the predetermined range by the pressure control portion 16. As a result, it is possible to effectively prevent the color drop from being generated in the textile product, and it is possible to effectively prevent the dye from being precipitated into the textile product and the autoclave 11.

Further, after the temperature in the autoclave 11 is lowered to be equal to or lower than the glass transition temperature, the temperature in the autoclave 11 is maintained at the predetermined temperature which is equal to or higher than the critical point of the carbon dioxide and equal to or lower than the glass transition temperature, while continuing the supply of the carbon dioxide from the supply pump 22 and the discharge of the supercritical carbon dioxide via the discharge valve 31. Thereafter, the supply pump 22 is stopped, and the pressure in the autoclave 11 is left open to the atmospheric pressure. As a result, the cleaning process is finished, and the textile product can be taken out of the autoclave 11.

As mentioned above, even in the cleaning device 2 structured by the minimum specification according to the second embodiment, it is possible to continuously carry out the cleaning process of the textile product and the autoclave 11 in succession to the dyeing process. Further, it is possible to stably maintain the temperature drop speed which lowers the temperature in the autoclave 11 in the predetermined range, during the cleaning process. Therefore, it is possible to effectively inhibit the dye from being precipitated into the textile product and the autoclave 11 so as to be attached, and it is possible to inhibit the color drop from being generated in the textile product, whereby it is possible to effectively and efficiently carry out the cleaning process of the textile product and the autoclave 11 in comparison with the conventional one.

### EXAMPLES

Hereinafter, a description will be given in detail of the invention by listing up examples, however, the invention is not limited to these examples. Main measured values of properties in the textile product after the cleaning process are determined by the following measuring methods.

### (1) Total K/S (T·K/S)

After measuring reflectance of the textile product to which the cleaning process is applied, at a plurality of positions of the textile product by using a spectrophotometer, a value of a total K/S of the textile product was measured from results of measurement. Here, the total K/S is obtained by determining K/S value by using Kubeluka-Munk Expression: K/S = (1 - R)²/2R (in which K indicates an absorption coefficient, S indicates a scattering coefficient, and R indicates a reflectance), from the reflectance measured in each of measuring wavelengths, and summing the values of K/S determined in a measuring range between 400 and 700 nm. The greater total K/S value shows a dark color, and the smaller total K/S value shows a light color.

### (2) CMC (1 : c) Color Difference Expression

The color drop generated at the cleaning time was evaluated by using CMC (1 : c) color difference expression and determining the color difference in relation to a reference point at a plurality of positions of the textile product, with regard to the textile product to which the cleaning process is applied. Here, CMC (1 : c) color difference expression is defined by SDC Color Measurement Committee, and is a color difference expression obtained by trying to display difference at uniform intervals in no color and clear color by compensating each of brightness, color saturation, and hue. In this case, on the assumption of brightness coefficient 1 = 2, and color saturation coefficient c = 1, color difference ΔE_{CMC(2:1)} in relation to the reference point was obtained at a plurality of positions of the textile product.

### Example 1

A band-like textile product constructed by a polyester fiber was prepared, and the dyeing process was applied to the textile product by using the cleaning device 1 shown in FIG. 1.

In the dyeing process, first of all, the textile product was wound around one bobbin at eleven times, and the bobbin was accommodated within the autoclave 11. Further, a red dye (C.I. Disperse Red 22) was accommodated together with the textile product within the autoclave 11. Next, the supply pump 22 was driven, and the supercritical carbon dioxide was supplied to the circulating route 12 from the storage tank 21 via the supply pump 22 and the preheating portion 24. Further, at the same time, the circulating pump 13 was driven, and the supercritical carbon dioxide was circulated in the circulating route 12 and the autoclave 11.

Further, the temperature in the autoclave 11 was raised to 125°C by the temperature control portion 15 and the pressure in the autoclave 11 was pressurized to 25 MPa by the pressure control portion 16 while circulating the supercritical carbon dioxide, and the autoclave 11 was thereafter kept at the temperature and the pressure for 70 minutes. As a result, the process of uniformly dyeing the textile product was carried out by the dye dissolved into the supercritical carbon dioxide.

After the dyeing process mentioned above was finished, the cleaning process was subsequently carried out. In the cleaning process, the pure supercritical carbon dioxide was newly supplied by driving the supply pump 22, and the supercritical carbon dioxide was discharged at a predetermined flow rate from the discharge valve 31, thereby gradually reducing the concentration of the dye in the supercritical carbon dioxide circulating in the autoclave 11 and the circulating route 12 with time.

At this time, the temperature in the autoclave 11 was continuously lowered from 125°C to 60°C at the temperature drop speed of 3.42°C/min by controlling the heating and cooling portion 14 by the temperature control portion 15 while maintaining the pressure in the autoclave 11 at 25 MPa by the pressure control portion 16. Further, after the temperature in the autoclave 11 was lowered to 60°C, the temperature in the autoclave 11 was maintained at 60°C for 30 minutes, while continuing the supply of the carbon dioxide from the supply pump 22 and the discharge of the supercritical carbon dioxide from the discharge valve 31.

Thereafter, the textile product was taken out of the autoclave 11 after the drive of the supply pump 22 was stopped, and the pressure in the autoclave 11 was left open to the atmospheric pressure. Then, the total K/S about the obtained textile product, and the color difference ΔE_{CMC(2:1)} of each of the layers when the outermost layer (the first layer) of the textile product wound around the bobbin was set to the reference point were obtained.

### Example 2

In Example 2, the dyeing process and the cleaning process of the textile product were carried out by setting the same as Example 1 mentioned above, except the control of the temperature drop speed to 10.83°C/min when the temperature in the autoclave 11 was lowered in the cleaning process. Thereafter, the total K/S about the obtained textile product, and the color difference ΔE_{CMC(2:1)} of each of the layers were determined.

### Example 3

In Example 3, the dyeing process and the cleaning process of the textile product were carried out by setting the same as Example 1 mentioned above, except the control of the temperature drop speed to 1.10°C/min when the temperature in the autoclave 11 was lowered in the cleaning process. Thereafter, the total K/S about the obtained textile product, and the color difference ΔE_{CMC(2:1)} of each of the layers were determined.

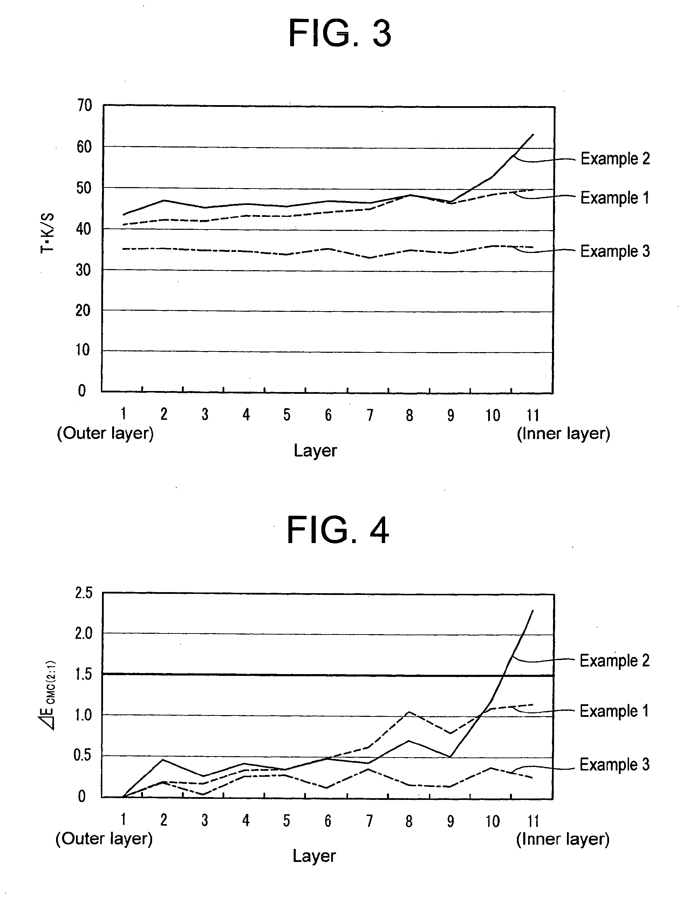

Here, with regard to the textile product according to Examples 1 to 3 mentioned above, results obtained by determining the total K/S is illustrated in FIG. 3, and results obtained by determining the color difference ΔE_{CMC(2:1)} of each of the layers is illustrated in FIG. 4. In the graphs in FIGS. 3 and 4, a horizontal axis indicates each of the layers of the textile product when the textile product is wound around the bobbin, and in the horizontal axis, an outermost layer of the wound textile product is set to a first layer, and an innermost layer (a layer in a center side) is set to an eleventh layer.

The cleaning process was applied to the textile product according to Examples 1 to 3 as mentioned above. Then, since the cleaning process was continuously carried out in succession to the end of the dyeing process, in any case of Examples 1 to 3, it was possible to efficiently clean the textile product and the autoclave 11 without discharging the supercritical carbon dioxide in the autoclave 11 in the same manner as the conventional one after the dyeing process so as not to leave open the autoclave 11 to the atmospheric pressure.

Further, as illustrated in FIG. 3, comparing the total K/S determined in the textile product according to Example 1 (temperature drop speed at cleaning process time: 3.42°C/min), with the total K/S determined in the textile product according to Example 2 (temperature drop speed at cleaning process time: 10.83°C/min), both indicated approximately the same value, and indicated the desired color. Accordingly, in the textile product according to Example 1 and the textile product according to Example 2, it is determined that the color drop is hardly generated when the cleaning process was carried out.

On the contrary, the total K/S determined in the textile product according to Example 3 (temperature drop speed at cleaning process time: 1.10°C/min) was lowered in each of the layers of the textile product, in comparison with the textile product according to Examples 1 and 2. In the textile product according to Example 3, it is thought that the lowering was caused by the fact that the dye got away from the textile product so as to drop when the cleaning process was carried out, since the temperature drop speed at the cleaning process time was a little slower.

Further, as illustrated in FIG. 4, in the textile product according to Example 1, and the textile product according to Example 3, the color difference ΔE_{CMC(2:1)} of each of the layers in relation to the reference point (the first layer) indicated a small value less than 1.5, and a color difference was not felt between the layers. Accordingly, in the textile product according to Example 1 and the textile product according to Example 3, it is confirmed that each of the layers was uniformly dyed, and it is determined that the precipitation of the dye causing the color difference was hardly generated.

On the contrary, in the textile product according to Example 2, the color difference ΔE_{CMC(2:1)} of the eleventh layer arranged in the inner side (the center side) of the bobbin indicated a value which is larger than 1.5, and it was felt that the eleventh layer is a little darker, in the comparison of color between the first layer and the eleventh layer.

It is thought that in the textile product according to Example 2, when the cleaning process was carried out while circulating the supercritical carbon dioxide from the inner side of the bobbin toward the outer side within the autoclave 11, the dye dissolved into the supercritical carbon dioxide was precipitated when the cleaning process was carried out, since the temperature drop speed for lowering the temperature in the autoclave 11 was a little faster, so that the dye was attached to the eleventh layer which was wound to the innermost side of the bobbin.

Based on the results mentioned above, it was confirmed that it is possible to inhibit the dye from being precipitated so as to be attached to the textile product when the cleaning process is carried out, and it is possible to inhibit the color from dropping from the textile product, by setting the temperature drop speed within the predetermined range in the case that the temperature in the autoclave 11 is lowered by the cleaning process, when the cleaning process is carried out.

### DESCRIPTION OF REFERENCE NUMERALS

- 1, 2: cleaning device
- 10: cleaning unit
- 11: autoclave
- 12: circulating route
- 13: circulating pump
- 14: heating and cooling portion
- 15: temperature control portion
- 15a: temperature sensor
- 15b: temperature control main body portion
- 16: pressure control portion
- 16a: pressure sensor
- 16b: pressure control main body portion
- 20: supply unit
- 21: storage tank
- 22: supply pump
- 23: cooler portion
- 24: preheating portion
- 25: bypass route
- 26: first opening and closing valve
- 27: second opening and closing valve
- 30: discharge unit
- 31: discharge valve
- 33: separating tank
- 40: collecting unit
- 41: compressor
- 42: aftercooler portion
- 51: cleaning unit
- 52: supply unit
- 53: discharge unit

## Claims

1. A cleaning method of cleaning a product which is accommodated in an autoclave (11) and includes a synthetic resin dyed by circulating a fluid in a supercritical state in a circulating route (12), the fluid into which dye is dissolved, and the autoclave (11) after the dyeing is finished, the cleaning method including continuously carrying out the cleaning by successively introducing a pure fluid in the supercritical state by supplying the fluid in a liquid state stored in a storage tank (21) via a supply pump (22) and preheating the supplied fluid at a preheating portion (24) to the supercritical state, the pure fluid including no dye, into the autoclave (11) after the end of the dyeing, and discharging the fluid in the supercritical state into which dye is dissolved from the circulating route (12) while introducing the pure fluid in the supercritical state, thereby gradually reducing a concentration of the dye in the fluid in the supercritical state, the fluid existing in the autoclave (11).

2. The cleaning method according to claim 1, including:
lowering a temperature within the autoclave (11) during the cleaning; and
carrying out a temperature drop process from a start of lowering of the temperature to an end of the lowering within a predetermined range of temperature drop time.

3. The cleaning method according to claim 2, including lowering the temperature in the autoclave (11) to a temperature which is equal to or lower than a glass transition temperature in a synthetic resin material included in the product.

4. The cleaning method according to claim 3, including, after the temperature in the autoclave (11) is lowered to the temperature which is equal to or lower than the glass transition temperature, maintaining the lowered temperature.

5. The cleaning method according to claim 2, including controlling a temperature drop speed for lowering the temperature between 2°C/min and 8°C/min.

6. The cleaning method according to claim 1, including keeping a pressure in the autoclave (11) at a time of the cleaning, within a predetermined range.

7. A cleaning device (1) for cleaning a product which is accommodated in an autoclave (11) and includes a synthetic resin dyed by circulating a fluid in a supercritical state, the fluid into which dye is dissolved, and the autoclave (11) after the dyeing is finished, the cleaning device including:
a cleaning unit (10) configured to clean the product and the autoclave (11) and a supply unit (20) configured to supply the fluid to the cleaning unit (10),
wherein the cleaning unit (10) includes a circulating route (12) configured to circulate the fluid in the supercritical state to the autoclave (11);
a circulating pump (13) which is arranged on the circulating route (12);
a heating and cooling portion (14 ) which is arranged on the circulating route (12) and is configured to heat or cool the fluid;
a temperature control portion (15) configured to measure a temperature in the autoclave (11) and to control an operation of the heating and cooling portion (14) and a pressure control portion (16) configured to measure a pressure within the autoclave (11);
wherein the supply unit (20) has a storage tank (21) storing the fluid in a liquid state, a supply pump (22) configured to supply the fluid from the storage tank (21) to the circulating route (12), a preheating portion (24) which is arranged in a downstream side of the supply pump (22) and is configured to preheat the fluid to the supercritical state and a bypass route (25) allowing the fluid to be supplied to the cleaning unit (10) without passing through the preheating portion (24);
a discharge valve (31) configured to discharge the fluid in the supercritical state from the circulating route (12) is provided;
the pressure control portion (16) is configured to control an operation of the supply pump (22) and an opening and closing operation of the discharge valve (31); and
the heating and cooling portion (14) is configured to heat or cool the fluid in the supercritical state circulated in the circulating route (12) and the fluid supplied from the supply unit (20).

8. The cleaning device according to claim 7, including:
a separating tank (33) which is connected to a downstream side of the discharge valve (31) and is configured to separate the dye from the fluid which is discharged from the circulating route (12) so as to be vaporized; and
a collecting portion (40 ) configured to collect the fluid from which the dye is separated.

## Patentansprüche

1. Reinigungsverfahren zum Reinigen eines Produkts, das in einem Autoklaven (11) aufgenommen ist und ein durch Zirkulieren eines Fluids, in dem Farbstoff gelöst ist, in einem überkritischen Zustand in einem Zirkulationsweg (12) gefärbtes synthetisches Harz enthält, und zum Reinigen des Autoklaven (11), nachdem das Färben beendet ist, wobei das Reinigungsverfahren Folgendes umfasst: kontinuierliches Durchführen der Reinigung durch sukzessives Einleiten eines reinen Fluids im überkritischen Zustand durch Zuführen des in einem Vorratstank (21) gespeicherten Fluids in flüssigem Zustand über eine Versorgungspumpe (22) und Vorwärmen des nach dem Ende des Färbens in den Autoklaven (11) zugeführten Fluids an einem Vorwärmabschnitt (24) auf den überkritischen Zustand, wobei das reine Fluid keinen Farbstoff enthält, und Entladen des Fluids im überkritischen Zustand, in dem der Farbstoff aufgelöst ist, aus dem Zirkulationsweg (12), während das reine Fluid im überkritischen Zustand eingeführt wird, wodurch eine Konzentration des Farbstoffs in dem im Autoklaven (11) vorhandenen Fluid im überkritischen Zustand allmählich verringert wird.

2. Reinigungsverfahren nach Anspruch 1, das Folgendes umfasst:
Absenken einer Temperatur innerhalb des Autoklaven (11) während der Reinigung; und
Durchführen eines Temperaturabfallprozesses von einem Beginn des Absenkens der Temperatur bis zu einem Ende des Absenkens innerhalb eines vorbestimmten Temperaturabfallzeitbereichs.

3. Reinigungsverfahren nach Anspruch 2, das Folgendes umfasst: Absenken der Temperatur in dem Autoklaven (11) auf eine Temperatur, die gleich oder niedriger als eine Glasübergangstemperatur in einem in dem Produkt enthaltenen Kunstharzmaterial ist.

4. Reinigungsverfahren nach Anspruch 3, das Folgendes umfasst: nachdem die Temperatur in dem Autoklaven (11) auf die Temperatur, die gleich oder niedriger als die Glasübergangstemperatur ist, abgesenkt wurde, Aufrechterhalten der abgesenkten Temperatur.

5. Reinigungsverfahren nach Anspruch 2, das Folgendes umfasst: Steuern einer Temperaturabfallgeschwindigkeit zum Absenken der Temperatur zwischen 2 °C/min und 8 °C/min.

6. Reinigungsverfahren nach Anspruch 1, das Folgendes umfasst: Halten eines Drucks in dem Autoklaven (11) während der Reinigung innerhalb eines vorbestimmten Bereichs.

7. Reinigungsvorrichtung (1) zum Reinigen eines Produkts, das in einem Autoklaven (11) aufgenommen ist und ein durch Zirkulieren eines Fluids, in dem Farbstoff gelöst ist, in einem überkritischen Zustand gefärbtes synthetisches Harz enthält, und zum Reinigen des Autoklaven (11), nachdem das Färben beendet ist, wobei die Reinigungsvorrichtung Folgendes umfasst:
eine Reinigungseinheit (10), die konfiguriert ist, um das Produkt und den Autoklaven (11) zu reinigen, und eine Zufuhreinheit (20), die konfiguriert ist, um der Reinigungseinheit (10) das Fluid zuzuführen,
wobei die Reinigungseinheit (10) einen Zirkulationsweg (12) umfasst, der konfiguriert ist, um das Fluid in dem überkritischen Zustand zu dem Autoklaven (11) zu zirkulieren;
eine Umwälzpumpe (13), die an dem Zirkulationsweg (12) angeordnet ist;
einen Heiz- und Kühlabschnitt (14), der an dem Zirkulationsweg (12) angeordnet ist und konfiguriert ist, um das Fluid zu erwärmen oder zu kühlen;
einen Temperatursteuerungsabschnitt (15), der konfiguriert ist, um eine Temperatur in dem Autoklaven (11) zu messen und einen Betrieb des Heiz- und Kühlabschnitts (14) zu steuern, und einen Drucksteuerungsabschnitt (16), der konfiguriert ist, um einen Druck innerhalb des Autoklaven (11) zu messen;
wobei die Zufuhreinheit (20) Folgendes aufweist: einen Vorratstank (21), in dem das Fluid in flüssigem Zustand gelagert wird, eine Zufuhrpumpe (22), die konfiguriert ist, um dem Zirkulationsweg (12) das Fluid aus dem Vorratstank (21) zuzuführen, einen Vorwärmabschnitt (24), der an einer stromabwärtigen Seite der Zufuhrpumpe (22) angeordnet ist und konfiguriert ist, um das Fluid auf den überkritischen Zustand vorzuwärmen, und einen Umgehungsweg (25), der es ermöglicht, dass das Fluid der Reinigungseinheit (10) zugeführt wird, ohne durch den Vorwärmabschnitt (24) zu gehen;
ein Ablassventil (31), das konfiguriert ist, um das Fluid im überkritischen Zustand aus dem Zirkulationsweg (12) zu entladen;
wobei der Drucksteuerungsabschnitt (16) konfiguriert ist, um einen Betrieb der Zufuhrpumpe (22) und einen Öffnungs- und Schließbetrieb des Ablassventils (31) zu steuern; und
wobei der Heiz- und Kühlabschnitt (14) konfiguriert ist, um das Fluid im überkritischen Zustand, das in dem Zirkulationsweg (12) zirkuliert wird, und das Fluid, das von der Versorgungseinheit (20) zugeführt wird, zu erwärmen oder zu kühlen.

8. Reinigungsvorrichtung nach Anspruch 7, die Folgendes umfasst:
einen Abscheidetank (33), der mit einer stromabwärtigen Seite des Ablassventils (31) verbunden ist und konfiguriert ist, um den Farbstoff von dem aus dem Zirkulationsweg (12) entladenen Fluid zu trennen, damit letzterer verdampft wird; und
einen Sammelabschnitt (40), der konfiguriert ist, um das Fluid zu sammeln, aus dem der Farbstoff abgetrennt wird.

## Revendications

1. Procédé de nettoyage destiné au nettoyage d'un produit qui est mis en place dans un autoclave (11) et qui comporte une résine synthétique colorée par circulation d'un fluide, dans lequel un colorant est dissout, à l'état supercritique dans une voie de circulation (12), et au nettoyage de l'autoclave (11) après que la coloration a pris fin, le procédé de nettoyage comprenant la réalisation en continu dudit nettoyage par introduction d'un fluide pur à l'état supercritique par apport dudit fluide à l'état liquide contenu dans une cuve de stockage (21) par le biais d'une pompe d'alimentation (22), suivie du préchauffage du fluide apporté à l'autoclave (11) après la fin de la coloration, au niveau d'une section de préchauffage (24), de façon qu'il atteigne l'état supercritique, le fluide pur ne comportant aucun colorant, suivi de l'évacuation hors de la voie de circulation (12) du fluide à l'état supercritique dans lequel le colorant est dissout, pendant l'introduction du fluide pur à l'état supercritique, réduisant ainsi graduellement la concentration de colorant dans le fluide à l'état supercritique présent dans l'autoclave (11).

2. Procédé de nettoyage selon la revendication 1, comportant :
la réduction de la température régnant dans l'autoclave (11) pendant le nettoyage, et
la réalisation d'un processus de chute de température à compter du début de la réduction de la température et jusqu'à la fin de ladite réduction, dans une plage prédéterminée de temps de chute de température.

3. Procédé de nettoyage selon la revendication 2, comprenant une réduction de la température dans l'autoclave (11) afin d'atteindre une température égale ou inférieure à la température de transition vitreuse dans la matière constituant la résine synthétique présente dans le produit.

4. Procédé de nettoyage selon la revendication 3, comprenant, après que la température de l'autoclave (11) a été réduite afin d'atteindre une température égale ou inférieure à la température de transition vitreuse, le maintien de ladite température réduite.

5. Procédé de nettoyage selon la revendication 2, comprenant la régulation de la vitesse de chute de température permettant la réduction de la température entre 2 °C/min et 8 °C/min.

6. Procédé de nettoyage selon la revendication 1, comportant la conservation d'une pression dans l'autoclave (11) dans une plage prédéterminée au moment du nettoyage.

7. Dispositif de nettoyage (1) destiné au nettoyage d'un produit qui est mis en place dans un autoclave (11) et qui comporte une résine synthétique colorée par circulation d'un fluide, dans lequel un colorant est dissout, à l'état supercritique, et au nettoyage de l'autoclave (11) après que la coloration a pris fin, le dispositif de nettoyage comprenant :
une unité de nettoyage (10) conçue pour le nettoyage du produit et de l'autoclave (11) et une unité d'alimentation (20) conçue pour effectuer l'alimentation en fluide auprès de l'unité de nettoyage (10),
ladite unité de nettoyage (10) comprenant une voie de circulation (12) conçue pour faire circuler le fluide à l'état supercritique en direction de l'autoclave (11) ;
une pompe de circulation (13) qui est agencée sur la voie de circulation (12) ;
une section de chauffage et de refroidissement (14) qui est agencée sur la voie de circulation (12) et conçue pour chauffer ou refroidir le fluide ;
une section de régulation de la température (15) conçue pour mesurer la température régnant dans l'autoclave (11) et pour réguler le fonctionnement de la section de chauffage et de refroidissement (14), et une section de régulation de la pression (16) conçue pour mesurer la pression régnant dans l'autoclave (11) ;
étant entendu que : l'unité d'alimentation (20) possède une cuve de stockage (21) contenant le fluide à l'état liquide, une pompe d'alimentation (22) conçue pour alimenter la voie de circulation (12) en fluide en provenance de la cuve de stockage (21), une section de préchauffage (24) qui est agencée côté aval de la pompe d'alimentation (22) et conçue pour préchauffer le fluide afin qu'il atteigne l'état supercritique, et une voie de contournement (25) permettant au fluide d'être apporté à l'unité de nettoyage (10) sans devoir traverser la section de préchauffage (24),
il est prévu une vanne d'évacuation (31) conçue pour l'évacuation du fluide à l'état supercritique de la voie de circulation (12),
la section de régulation de la pression (16) est conçue pour réguler le fonctionnement de la pompe d'alimentation (22) et l'opération d'ouverture et de fermeture de la vanne d'évacuation (31), et
la section de chauffage et de refroidissement (14) est conçue pour chauffer ou refroidir le fluide à l'état supercritique circulant dans la voie de circulation (12) et le fluide apporté en provenance de l'unité d'alimentation (20).

8. Dispositif de nettoyage selon la revendication 7, comprenant :
une cuve de séparation (33) raccordée à un côté aval de la vanne d'évacuation (31) et conçue pour séparer le colorant du fluide évacué de la voie de circulation (12) afin que ce dernier soit vaporisé, et
une section de récupération (40) conçue pour récupérer le fluide duquel le colorant a été séparé.
